# FASCICULE DE BREVET EUROPEEN

(11) **EP 1 432 246 B1**
(45) Date de publication et mention de la délivrance du brevet: **26.05.2010**
(21) Numéro de dépôt: 03293014.1
(22) Date de dépôt: 02.12.2003
(51) Int. Cl.: H04N 5/783

(54) **Procede et dispositif de decodage et d'affichage en marche arriere d'images mpeg, circuit pilote video et boitier decodeur incorporant un tel dispositif**
Verfahren und Gerät zur Dekodierung und zur Rückwärtsanzeige von MPEG-Bildern, Pilotvideoschaltung und ein ein solches Gerät enthaltender Dekoder
MPEG images decoding and reverse display procedure and device, video pilot circuit and decoder including such a device

(30) Priorité: 20.12.2002 FR 0216328
(43) Date de publication de la demande: 23.06.2004
(73) Titulaire: STMicroelectronics S.A., 92120 Montrouge (FR)
(72) Inventeur: Roelens, Frédéric, 75014 Paris (FR)
(74) Mandataire: Verdure, Stéphane

(56) Documents cités:
- EP-A- 1 003 339
- EP-A- 1 005 226
- WO-A-01/37572

## Description

La présente invention se rapporte au décodage et à l'affichage de programmes audiovisuels contenus dans un flux de données numériques compressées.

Elle trouve des applications dans les décodeurs vidéo comportant une fonctionnalité d'enregistrement numérique personnel (PVR, de l'anglais "Personal Video Recorder"). Dans de tels décodeurs, un enregistrement de programmes est effectué sur un support numérique de stockage de masse (ou DSM, de l'anglais "Digital Storage Media") tel qu'un disque dur, une cassette vidéo numérique, un DVD ("Digital Versatile Disk"), etc...

Les décodeurs concernés sont notamment les boîtiers décodeurs ("Set-Top Box" en anglais) assurant l'interface entre une arrivée de signaux numériques diffusés en temps réel par satellite, par câble ou par diffusion numérique terrestre (ou DVB, de l'anglais "Digital Video Broadcasting") d'une part, et un téléviseur analogique d'autre part. Un tel boîtier décodeur est un appareil autonome ("Stand-alone"). Mais l'invention s'applique aussi aux décodeurs intégrés à un téléviseur numérique, ou à un appareil numérique de lecture/enregistrement tel qu'un lecteur de DVD, un lecteur de cassettes vidéo numériques ("Digital Video Cassette Recorder"), ou similaire.

Un boîtier décodeur reçoit un ou plusieurs programmes sous la forme d'un flux de données numériques compressées, c'est-à-dire dont les trames vidéo (i.e., les images) et les trames audio sont codées de manière à réduire le volume des données diffusées. Par exemple, ce codage respecte les spécifications de la norme MPEG-2 (ISO/IEC 13818-2) ci-après norme MPEG ("Motion Pictures Expert Group"). Cette norme définit une technique de compression de données pour le codage des images animées et du son (notamment pour la télévision numérique).

Dans la présente description, le terme "présentation", lorsqu'il est utilisé en relation avec un programme, désigne la restitution des données audio et vidéo décodées, sous forme respectivement audible et visible par un utilisateur. Le terme "lecture" ("playback" en anglais), utilisé en relation avec un programme, désigne plus spécifiquement le décodage et l'affichage du programme à partir d'un enregistrement du programme sur un disque dur. Le terme affichage ("display" en anglais) est plus particulièrement utilisé pour désigner la présentation des trames vidéo.

Le disque dur permet d'offrir un certain nombre de fonctionnalités, notamment la mise en oeuvre de modes de lecture évolués ("trick modes", en anglais), c'est-à-dire une lecture à une vitesse différente d'une vitesse nominale (x1) en marche avant. Il s'agit notamment de l'avance rapide ("fast forward") et de la lecture en marche arrière ("rewind") accélérée ou non.

Les difficultés rencontrées aujourd'hui pour la mise en oeuvre de cette dernière fonctionnalité proviennent du fait que le flux MPEG est, par nature, adapté à une lecture en marche avant. En effet, les images sont transmises dans un ordre destiné à faciliter le décodage en marche avant. Pour la lecture en marche arrière, cet ordre de transmission impose de disposer de ressources de calcul ayant une rapidité de décodage suffisante pour réaliser toutes les opérations de décodage nécessaires au décodage de chaque image. A défaut, il convient de disposer d'une grande capacité de stockage pour stocker toutes les images décodées (i.e., les données d'images après décompression) à partir du début d'un groupe d'images ("Group Of Pictures" ou GOP) au sens de la norme MPEG, dans la mesure ou les images du début du GOP peuvent à nouveau servir au décodage d'une image suivante dans le GOP. Cette capacité de stockage est fournie par des mémoires de trame, dont chacune est adaptée pour stocker les données d'une image décodée.

Dans la demande de brevet européen EP-A-0 735 780, il est proposé une technique de lecture en marche arrière d'un flux vidéo MPEG utilisant le même nombre de mémoires de trames que pour la lecture en marche avant. Ce nombre est égal à trois. Néanmoins la méthode consiste à sauter les images B, et à ne décoder que trois images I ou P au maximum, puis à passer au GOP précédent (dans l'ordre d'affichage en marche avant) dès que ce nombre est atteint.

Les documents EP-A-1 005 226 et EP-A-1 003 339 décrivent aussi des autres techniques de lecture en marche arrière en utilisant trois mémoires de trame.

La demande internationale de brevet WO 01/37572 propose, pour la lecture en marche arrière d'un flux vidéo MPEG, une technique permettant d'afficher toutes les images d'un GOP. La technique consiste à stocker temporairement, dans au minimum quatre mémoires de trame, les données décompressées de certaines images utiles au décodage ultérieur de plusieurs images à afficher, plutôt que de recommencer les opérations de décodage successives depuis le début du GOP. Ce document décrit un exemple de GOP qui peut ainsi être décodé dans son entier en utilisant quatre mémoires de trame seulement. Cet exemple correspond au cas de la lecture d'un programme stocké sur un DVD, avec des GOPs contenant un nombre limité d'images. Cependant il n'est fourni aucune garantie sur le résultat de la technique.

Un but de l'invention est, parmi d'autres, de proposer des règles de gestion pour optimiser l'usage des mémoires de trame disponibles pour l'affichage en marche arrière d'images d'un flux vidéo MPEG, en particulier un flux vidéo MPEG, stocké sur le disque dur d'un boîtier décodeur.

Un premier aspect de l'invention propose ainsi un procédé de décodage et d'affichage en marche arrière d'images d'un flux de données d'images compressées selon la norme MPEG-2 utilisant un nombre déterminé N de mémoires de trame adaptées chacune pour stocker une image décodée, où N est un nombre entier supérieur ou égal à 4, le dit flux de données contenant des images codées du type I et des images codées du type P et B. Les règles suivantes sont appliquées lorsqu'une image stockée dans une mémoire de trame doit être écrasée pour permettre le stockage d'une nouvelle image à décoder :
- on écrase en priorité les données d'une mémoire de trame dans laquelle est stockée une image obsolète c'est-à-dire une image qui a déjà été affichée et qui n'est plus nécessaire pour effectuer un prochain décodage d'image ou, à défaut ;
- on écrase en priorité les données d'une mémoire de trame dans laquelle est stockée une image qui présente un coût de décodage minimum le dit coût de décodage étant calculé en fonction du nombre d'images de référence nécessaires pour le décodage de l'image;
- les données d'une mémoire de trame dans laquelle est stockée une image qui est en cours d'affichage ne peuvent pas être écrasées;
- les données d'une mémoire de trame dans laquelle est stockée une image qui est prête pour l'affichage mais n'a pas encore été affichée ne peuvent pas être écrasées;
- les données d'une mémoire de trame dans laquelle est stockée une image de référence nécessaire pour le décodage de ladite nouvelle image à décoder ne peuvent pas non plus être écrasées;
- si les données d'aucune mémoire de trame ne peuvent être écrasées en application des règles précédentes, on suspend le décodage jusqu'à l'affichage d'une image prête pour l'affichage et on évalue à nouveau ces règles après cet affichage.

Le fait qu'une image satisfasse la condition selon laquelle une image a déjà été affichée et n'est plus nécessaire pour le décodage d'une autre image, (en particulier une autre image à décoder pour obtenir la prochaine image à afficher) peut être déterminée à partir d'une table d'indexation dans sa version enrichie (voir plus loin).

Ces règles permettent d'atteindre un résultat optimal en terme de continuité de l'affichage, en fonction notamment de la rapidité du décodage pour une vitesse d'affichage donnée. Quand aucune mémoire de trame ne peut être écrasée pour le stockage de la nouvelle image à décoder en application des cinq premières règles, la dernière règle conduit à attendre qu'il y en ait une qui puisse être utilisée, ceci se produit quand est affichée une image qui est prête pour l'affichage en étant stockée dans l'une des mémoires de trame. Le procédé peut se réaliser en utilisant un nombre N de mémoires de trames qui est idéalement aussi grand que possible. Le procédé produit ses effets dès lors que N est inférieur au nombre d'images contenues dans un GOP, groupe d'images ("Group Of Pictures") au sens de la norme MPEG. Au minimum, N doit être égal à quatre. En utilisant ces mémoires selon le procédé, on limite le nombre total d'opérations de décodage à réaliser pour afficher les images en marche arrière. Lorsque N est égal à quatre, l'une des mémoires de trame est utilisée pour stocker l'image en cours d'affichage, et, parmi les trois autres, l'une peut être utilisée pour recevoir les données décompressées de l'image à décoder et les deux autres pour stocker les au plus deux images de référence nécessaires à cet effet (si l'image à décoder est une image B). Bien entendu, l'affectation des mémoires de trames évolue dynamiquement de façon non déterministe.

Avantageusement, les images de type I présentent un premier coût de décodage déterminé ; les images de type P prédites à partir d'une image de type I présentent un deuxième coût de décodage, supérieur audit premier coût de décodage ; et les images de type P prédites à partir d'une autre image de type P présentent un coût de décodage supérieur au coût de décodage de ladite autre image de type P.

Par exemple, si le coût de décodage d'une image I est égal à l'unité, le coût de décodage d'une image P prédite à partir de n images de référence (image I et/ou image(s) P précédentes) est égal à n + 1.

De préférence, on considère que les images de type B présentent le même coût de décodage que les images I, car elles ne sont décodées qu'au moment de leur affichage et peuvent être écrasées immédiatement après (puisqu'une image B n'est pas une image de référence servant au décodage d'une autre image).

Dans un mode de mise en oeuvre avantageux, on vérifie avant de décoder une prochaine image à afficher, si elle n'est pas déjà stockée dans l'une quelconque des mémoires de trame. Dans ce cas en effet, il est inutile de la décoder à nouveau.

Pour l'affichage, le procédé peut comprendre des étapes consistant à déterminer à chaque événement de synchronisation d'affichage d'image si les mémoires de trames contiennent une image prête pour l'affichage. Un tel évènement correspond par exemple à une impulsion du signal de synchronisation verticale (Signal Vsync) de l'écran d'un téléviseur analogique. On entend par image prête pour l'affichage, une image décodée venant à la suite, dans l'ordre d'affichage des images en marche arrière, des images qui ont déjà été affichées. Si une telle image est présente alors on l'affiche, et on la marque comme obsolète après l'affichage si elle n'est plus nécessaire pour effectuer un décodage d'image, c'est-à-dire si elle n'est pas une image de référence pour une autre image à décoder/afficher. Pour la vérification de cette dernière condition, on peut avantageusement se baser sur le contenu d'une table d'indexation enrichie (voir plus loin) associée à la portion de flux comprise dans la mémoire tampon. Si au contraire aucune telle image n'est présente, on répète l'affichage de l'image affichée à l'événement de synchronisation d'affichage d'image précédent. Ceci revient à effectuer un gel d'image, qui est préférable à un manque d'image apparaissant comme une image noire à l'écran.

Dans le type d'applications envisagé, le flux de données compressées est lu par portions à partir d'un support numérique de stockage de masse, par exemple un disque dur, en réponse à une commande de lecture en marche arrière.

Un mode de mise en oeuvre de l'invention comprend les étapes consistant à :
a) charger une portion du flux dans une mémoire tampon ;
b) analyser ladite portion du flux afin d'identifier le point d'accès ("Access Point") d'un groupe d'images décodable et de déterminer au moins pour chacune des images dudit groupe, des informations incluant l'adresse de l'image dans la mémoire tampon, une estampille temporelle de présentation associée à un ordre d'affichage de l'image en marche avant, et le type I, P ou B de l'image, et stocker lesdites informations dans une table d'indexation ("Trick Mode Table") déterminée ;
c) obtenir une table d'indexation enrichie en complétant la table d'indexation obtenue à l'étape b en précisant pour chaque image de type P ou B sa ou ses images de référence ;
d) à partir de la table d'indexation, déterminer pour une prochaine image à afficher, une liste ("Trick List") de reconstruction qui est une liste ordonnée des images de référence à décoder séquentiellement à partir dudit point d'accès pour obtenir ladite prochaine image à afficher ;
e) à partir de ladite liste de reconstruction, obtenir ladite prochaine image à afficher en décodant tout ou partie des images de ladite liste de reconstrucrion.

Un groupe d'images décodable est un groupe d'images consécutives du flux qui peuvent être décodées sans avoir besoin de connaître d'autres images que celles du groupe (hormis pour les images constituant ce qui est appelé un lien cassé ("Broken Link") dans la norme MPEG. Typiquement un tel groupe correspond à un GOP, bien qu'un GOP puisse parfois contenir plusieurs tels groupes d'images décodables. Un point d'accès, au sens de la norme MPEG, est une image I à partir de laquelle il est possible de décoder un groupe d'images venant à la suite dans le flux.

De préférence, le procédé comprend, entre l'étape b) et l'étape c), l'attribution à chacune des images codées dans ladite première portion du flux d'un numéro d'identification unique permettant de l'identifier de manière univoque dans le flux.

Dans un exemple, les numéros d'identification sont attribués aux images codées dans le flux de façon séquentielle, suivant l'ordre d'affichage des images. A cet effet, on utilise les PTS précitées.

Ainsi, à l'étape d), la prochaine image à afficher en marche arrière non encore décodée peut être déterminée à partir de son numéro d'identification, en décomptant les numéros d'identification.

Le numéro d'identification des images est par exemple codé sur 32 bits, et est initialisé à la valeur h0x800000 (c'est-à-dire 0x800000 en notation hexadécimale) et est respectivement incrémenté ou décrémenté d'une unité selon qu'on parcourt le flux en marche avant ou en marche arrière. Ainsi, cela permet la lecture en marche avant ou en marche arrière, de plusieurs heures de vidéo.

Avantageusement, pour obtenir une prochaine image, on vérifie d'abord si l'une au moins des images de sa liste de reconstruction n'est pas déjà stockée dans l'une quelconque des mémoires de trame. Dans l'affirmative, on commence à décoder séquentiellement les images de ladite liste non pas à partir du point d'accès du groupe d'images décodable mais à partir de ladite image déjà stockée, ou, le cas échéant, à partir de celles desdites images déjà stockées qui présentent le coût de décodage le plus élevé. On évite ainsi d'effectuer à nouveau des opérations de décodage qui ont déjà été faites et dont le résultat est toujours disponible dans les mémoires de trames.

Dans un mode de mise en oeuvre avantageux on calcule, à chaque fois qu'une image est affichée, un retard par rapport à une vitesse d'affichage théorique (par exemple la vitesse nominale x1 si on affiche en marche arrière à une vitesse non accélérée). De plus, à l'étape d), on détermine la prochaine image à afficher de manière à annuler le retard en sautant des images (c'est-à-dire en ne les décodant pas et en ne les affichant pas), selon les règles de priorité suivantes :
- on saute en priorité une ou plusieurs images B ;
- si un ou des sauts d'images B ne suffisent pas pour annuler le retard, on saute une ou plusieurs images P ;
- si un ou des sauts d'images P ne suffisent pas pour annuler le retard, on saute une ou plusieurs portions du flux de données lors du chargement, à l'étape a), d'une prochaine portion du flux de données dans la mémoire tampon.

Ces règles permettent notamment de déterminer s'il convient de réaliser des sauts dans les images à afficher, en fonction du retard pris dans l'affichage par rapport à la vitesse nominale, voire si une portion de flux ne peut pas être décodée. Ainsi, on peut compenser des retards du processus de décodage par rapport au processus d'affichage.

De préférence, la mémoire tampon comprend un premier et un second banc de mémoire. Les étapes d) et e) sont réalisées dans ledit premier banc de mémoire pour une première portion du flux de la mémoire tampon, pendant que les étapes a) à c) sont réalisées dans ledit second banc de mémoire pour une seconde portion du flux. Le processus de décodage est ainsi plus fluide.

Avantageusement, on charge la mémoire tampon de manière que les données stockées dans l'un ou l'autre des premier et second bancs de mémoire ne sont pas écrasés à l'étape a) tant que ces données sont encore nécessaires au traitement des données contenues dans l'autre desdits premier et second bancs de mémoire.

De préférence, les données stockées dans l'un ou l'autre des premier et second bancs de mémoire sont écrasés avec une nouvelle portion du flux, à l'étape a), dès que ces données ne sont plus nécessaires au traitement des données contenues dans l'autre desdits premier et second bancs de mémoire. On perd ainsi un minimum de temps avant de pouvoir entamer le processus de décodage pour une portion suivante du flux.

Avantageusement, les portions de flux chargées dans le premier banc de mémoire et dans le second banc de mémoire se chevauchent, une jonction entre ces deux portions pouvant être réalisée entre les deux parties de flux au niveau d'une image commune. Ceci est particulièrement avantageux lorsque le flux est embrouillé ("scrambled"). En effet, il est alors impossible de courber le flux de données exactement entre deux images.

On notera que la table d'indexation peut alors avantageusement être commune pour les deux portions de flux.

A noter qu'on se place ici au niveau de l'image dans un but de généralisation de l'exposé, mais que le procédé s'applique de la même façon à chaque trame d'une image dans le cas d'un système d'affichage entrelacé ("Interleaved Display").

Un deuxième aspect de l'invention se rapporte à un dispositif comprenant des moyens pour la mise en oeuvre du procédé ci-dessus.

Un troisième aspect de l'invention se rapporte à un circuit pilote vidéo ("Video Driver" en anglais) comprenant un dispositif selon le deuxième aspect.

Un autre aspect encore de l'invention concerne un boîtier décodeur ("Set Top Box" en anglais) comprenant un circuit pilote vidéo selon le troisième aspect.

D'autres particularités et avantages de la présente invention apparaîtront dans la description ci-après d'exemples de réalisation non limitatifs, en référence aux dessins annexés, dans lesquels :
- la figure 1 présente un dispositif permettant de mettre en oeuvre l'invention ;
- la figure 2 présente un synoptique présentant les étapes du procédé selon une réalisation de notre invention ;
- la figure 3 présente une table d'indexation telle que constituée dans l'étape b) d'une réalisation de la présente invention ;
- la figure 4 présente la table d'indexation de la figure 3 dans sa version enrichie après l'étape c) ;
- la figure 5 présente des images contenues dans un GOP et les liens de prédiction entre les différentes images ;
- la figure 6 présente le contenu d'une table d'indexation relative à une première portion de flux dans un premier banc de mémoire ;
- la figure 7 présente le contenu d'une seconde portion de flux dans un second banc de mémoire avant l'étape d'indexation ;
- la figure 8 présente la table d'indexation commune aux deux portions de flux des deux bancs de mémoires selon les figures 6 et 7, après la phase de jonction entre la première et la seconde portion de flux.

Rappelons tout d'abord quelques notions utilisées dans la norme MPEG. Tout d'abord, le type I, P ou B des images codées est défini de la manière suivante :
- une image de type I (intra) ou image I est une image codée sans référence à une autre image et pour laquelle l'ensemble des informations nécessaires au décodage est contenu dans l'image elle-même ;
- une image de type P (prédite) ou image P est une image qui doit être décodée en utilisant les informations relatives à une image de référence I ou P antérieure suivant l'ordre d'affichage en marche avant (par la suite, on nommera une image P prédite d'une image I « image P prédite une fois », une image P prédite elle-même d'une image P prédite une fois « image P prédite deux fois » et plus généralement une image P « image P prédite n fois » lorsqu'elle est prédite depuis une image I via n-1 images P ;
- une image de type B (bidirectionnelle) ou image B est une image qui doit être décodée en utilisant des informations relatives à une première et une seconde images de référence (I et/ou P) antérieures ou postérieures suivant l'ordre d'affichage en marche avant.

Par conséquent, les images forment des groupes élémentaires qui sont décodables indépendamment des autres groupes élémentaires. Un groupe d'images c'est-à-dire un GOP, au sens de la norme MPEG peut contenir plusieurs de ces groupes élémentaires. Dans les faits, il s'avère toutefois qu'un GOP comprend au plus un seul groupe élémentaire. Des images B bidirectionnelles peuvent être interpolées entre des images de ces groupes élémentaires, constituant alors un lien cassé ("broken-link") au sens de la norme.

Des points d'accès directs associés à des codes de démarrage (codes de séquence et codes d'extension de séquence) caractérisent le début de ces groupes élémentaires.

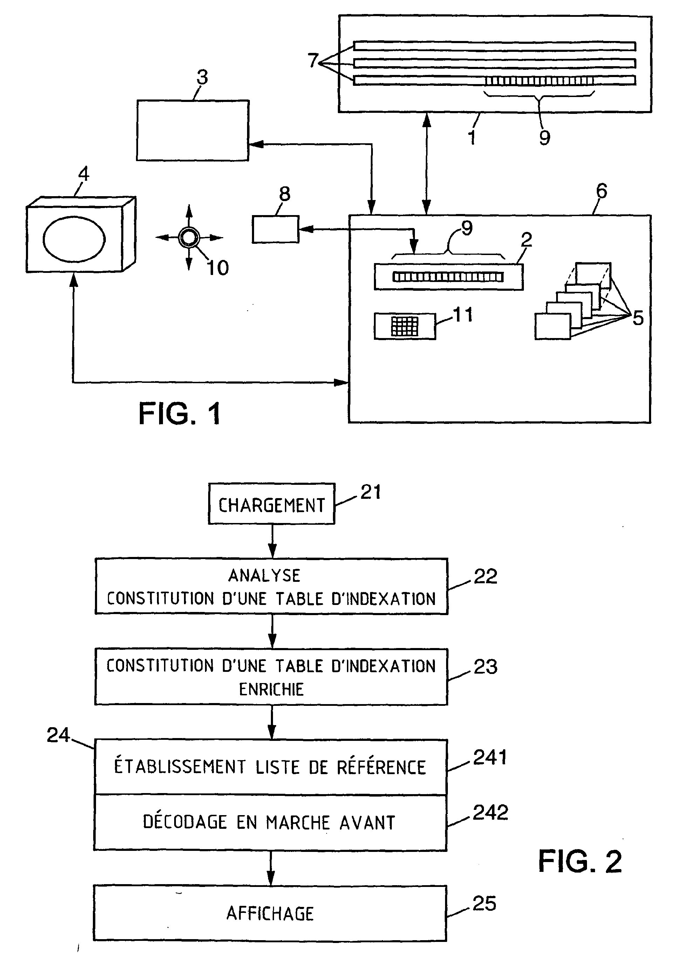

La figure 1 montre schématiquement un dispositif pour la mise en oeuvre du procédé selon l'invention.

Le dispositif comprend :
- un disque dur 1 sur lequel est stocké un flux 7 de données contenant des images codées selon la norme MPEG ;
- une mémoire 6, qui comprend :
   une mémoire tampon 2 destinée à stocker une portion 9 de flux compressé et,
   une table d'indexation 11 sur lesquelles on reviendra plus loin et,
   des mémoires de trames 5 destinées à stocker les données d'images décompressées.
- un module analyseur 8, adapté pour détecter les codes de démarrage, extraire du flux des informations permettant de localiser les images dans la mémoire, en donnant un point de départ à un comptage d'octets utilisé pour la localisation,
- un décodeur vidéo 3, en particulier un décodeur MPEG, qui est capable de décoder une image MPEG définie notamment par sa position dans la mémoire tampon et dont les paramètres définissant les zones mémoires où il faut stocker l'image à décoder et celles où il faut lire les données des images de référence (décodées) nécessaires à ce décodage, sont configurables,
- un module d'affichage 4, adapté pour lire les images décodées dans la mémoire 6 et les traduire dans le format utilisé pour l'affichage, par exemple le format PAL, SECAM ou NTSC. Il permet en outre la sélection des trames dans le cas d'images entrelacées,
- une unité de contrôle 10 qui supervise le fonctionnement du dispositif.

Les étapes du procédé selon l'invention vont maintenant être exposées en référence au diagramme de la figure 2.

Le procédé démarre à la réception d'une commande de lecture en marche arrière des images contenues dans le flux 7 stocké sur le disque dur 1. Dans une première étape 21, la mémoire tampon 2 est chargée avec une première portion 31 (figure 1) du flux 7. Ces images sont disponibles dans leur ordre d'enregistrement sur le disque dur et aucune information sur les images notamment sur leur localisation dans cette portion 31 n'est disponible à ce stade (on suppose que le démultiplexage/désembrouillage a été réalisé en amont, sinon une étape intermédiaire de démultiplexage/désembrouillage doit être ajoutée).

Puis, dans une étape 22, la portion 31 de flux 7 est analysée à l'aide du module analyseur 8, afin de notamment déterminer des informations incluant la position des codes de démarrage des groupes élémentaires, l'adresse de départ des images dans la mémoire tampon 2, pour chaque image une estampille temporelle associée à un ordre d'affichage en marche avant, et le type I, P ou B de chacune des images codées dans ladite première portion de flux. Ces informations sont stockées dans une table d'indexation telle que 11 (figure 1).

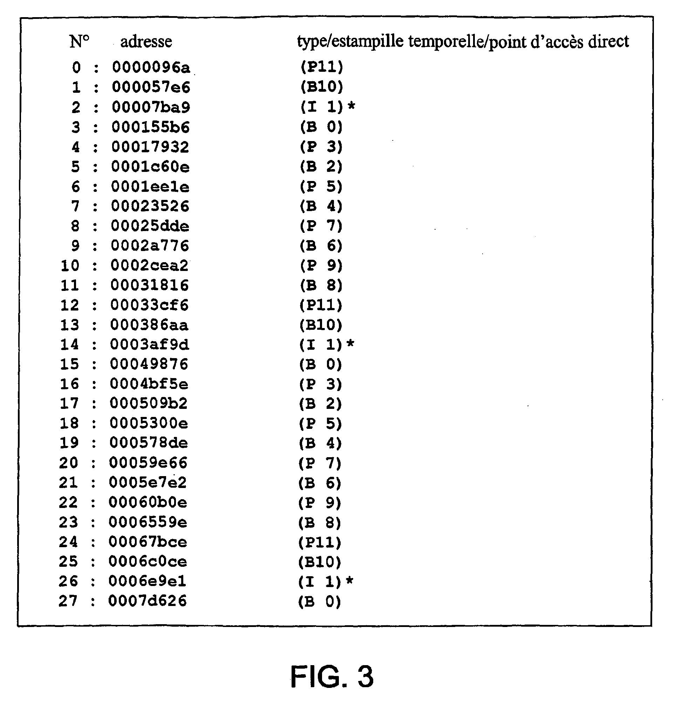

Un exemple de table d'indexation résultant de la mise en oeuvre de l'étape 22 est donné par le tableau de la figure 3. Elle correspond à une portion de flux 31 provenant d'une diffusion satellite ; l'astérisque sur les images n°2, 14 et 26 signale la présence d'un code de démarrage au niveau de ces images correspondant au début d'un groupe élémentaire. La mémoire tampon 2 contient ici 28 images (numérotées ici de 0 à 27 pour faciliter le repérage). L'image n°27 n'est pas complète : seul le début des données qui la codent a été extrait du flux 7. Pour chaque image, la table contient l'adresse dans la mémoire tampon du début de l'image, le type I, P ou B et l'estampille temporelle de l'image dans le groupe. Sur la figure 3, les images sont identifiés par leur type I, B ou P et par leur numéros d'ordre d'affichage en marche avant dans le groupe élémentaire (soit pour l'exemple considéré de 0 à 11) ; ainsi 11, qui a été diffusé dans le flux avant B0, est une image de type I qui sera affichée (selon un ordre d'affichage en marche avant) avant l'image de type B identifiée par B2 et avant l'image de type B identifiée par B0, pour le groupe élémentaire considéré.

Ensuite, dans une étape 23, on attribue à chaque image du flux un identifiant unique. Il s'agit par exemple d'un nombre codé sur 32 bits (la valeur d'initialisation étant par exemple h0x80000000) croissant selon l'ordre d'affichage en marche avant. De plus on détermine pour chacune des images identifiées de façon unique dans la portion 31 du flux 7, quelles sont ses images de référence c'est-à-dire les images décodées à obtenir pour pouvoir décoder l'image considérée.

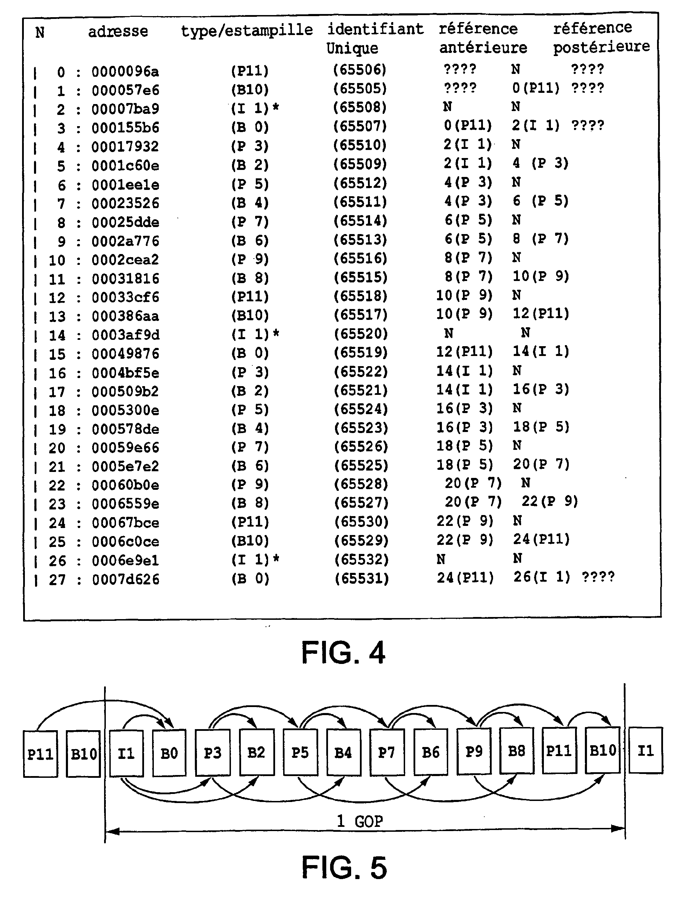

Un exemple du résultat de l'étape 23 mise en oeuvre sur le contenu de la table d'indexation 11 considérée précédemment et illustrée sur la figure 3, est illustré par le tableau de la figure 4, dont la colonne position donne l'adresse du début de chaque image dans la mémoire tampon, la seconde colonne indique le type d'image et le numéro d'ordre d'affichage en marche avant dans le groupe élémentaire correspondant, la troisième colonne indique l'identifiant unique attribué représenté dans sa forme décimale pour plus de lisibilité, les quatrième et cinquième colonnes indiquent les images de références respectivement antérieures et postérieures des images de type P et B. Ainsi, par exemple, pour obtenir l'image B4 d'identifiant 65523, le tableau indique que les images de référence P3 d'identifiant 65522 et P5 d'identifiant 65524 sont nécessaires. Les points d'interrogation indiquent que les informations ne sont pas disponibles ; le sigle N indique qu'aucune donnée n'est nécessaire.

Dans une étape 24, une image donnée étant décodée et étant en cours d'affichage, on détermine via les informations de la table d'indexation produite à l'étape 22, la prochaine image à afficher et son adresse, et on décode cette image. On considère au regard du tableau de la figure 4, l'exemple suivant : l'image P5 d'identifiant 65524 est en cours d'affichage ; la prochaine image à décoder et afficher est donc l'image B4 d'identifiant 65523. Pour réaliser le décodage de l'image B4, on réalise les étapes consistant à :
- dans une étape 241, à partir des images de référence de l'image à décoder B4 d'identifiant 65523 et des résultats de l'étape 23, on établit la liste (ordonnée) des images de référence successives qu'il est nécessaire de décoder depuis les images de type I correspondant à un code de démarrage de groupe élémentaire d'images. Cette liste est appelée "liste de reconstruction". Ainsi pour obtenir B4 d'identifiant 65523, il faut avoir P5 d'identifiant 65524 et P3 d'identifiant 65522. Pour avoir P3 d'identifiant 65522, il faut avoir I1 d'identifiant 65520. Pour avoir P5 d'identifiant 65524, il faut avoir P3 d'identifiant 65522, donc avoir I1 d'identifiant 65520. I1 d'identifiant 65520 est une image de type I, correspondant à un code de démarrage. La liste de reconstruction de B4 d'identifiant 65523 est donc {B4, P5, P3, I1}, dont les identifiants ont été indiqués ci-dessus.
- la prochaine étape 242 consiste à réaliser ensuite, à partir de la liste de reconstruction constituée à l'étape 241, le décodage MPEG dans l'ordre d'affichage en marche avant des images contenues dans la liste de reconstruction pour réaliser in fine le décodage MPEG de l'image B4 d'identifiant 65523. Ainsi on reconstruit cette image B4 en décodant les images I1 d'identifiant 65520, puis P3 d'identifiant 65522, puis P5 d'identifiant 65524, puis B4 d'identifiant 65523.

La dernière étape (étape 25) consiste, une fois les données décompressées de B4 d'identifiant 65523 ainsi obtenues, à afficher cette image. Les étapes d'affichage et de décodage se font en parallèle. En pratique, l'affichage ne peut toutefois avoir lieu, à une vitesse d'affichage nominale commandée par l'utilisateur, que lorsque l'image devant être afficher a été décodée. En cas de retard du décodage, le dispositif d'affichage continue donc à afficher l'image en cours d'affichage tant que l'image à afficher suivante n'est pas disponible. Par ailleurs, le décodage peut se réaliser en avance de phase sur les prochaines images à afficher, dans la mesure où les ressources en mémoire et la vitesse du décodeur le permettent. Par exemple, pendant que l'image B10 d'identifiant 65529 est affichée, les étapes 241 et 242 peuvent, si les ressources en mémoire et la vitesse du décodeur le permettent, être mises en oeuvre pour décoder l'image P9 d'identifiant 65528, puis B8 d'identifiant 65527, puis P7 d'identifiant 65526 et les tenir à disposition du dispositif d'affichage.

Ces dernières étapes 24 et 25 sont reproduites tant qu'il reste des images à afficher non décodées parmi toutes les images contenues dans la première portion du flux 31 et pour lesquelles les informations nécessaires au décodage sont présentes.

Pour stocker les données décompressées des images décodées utilisées pendant les phases de décodage et d'affichage, on utilise un certain nombre de mémoires de trames 5. L'une de ces mémoires de trames est utilisée pour recueillir les données de l'image en cours d'affichage, les autres sont utilisées pour le décodage de la prochaine image à afficher. Dans un cas idéal, l'élément décodable individuellement étant un groupe élémentaire, il faudrait autant de mémoires de trames que d'images dans un groupe élémentaire, généralement entre 12 et 24.

Cependant il n'est pas toujours possible de disposer d'autant de ressource mémoire et il faut en pratique se limiter à un nombre inférieur de mémoires de trame.

On sait qu'une image I se suffit à elle-même donc une mémoire de trame suffit pour décoder une image I. On sait aussi qu'une image P nécessite de disposer d'une autre image pour pouvoir être décodée, c'est pourquoi deux mémoires de trame sont nécessaires pour reconstruire une image P depuis sa référence. Enfin on sait qu'une image B a besoin de deux autres images pour pouvoir être décodée, c'est pourquoi trois mémoires de trame sont nécessaires. Ainsi au minimum, quatre mémoires de trames sont nécessaires et suffisantes (une pour le stockage de l'image en cours d'affichage et trois pour le décodage d'une prochaine image à afficher).

L'utilisation d'un nombre de mémoires de trames inférieur au nombre total de décodages successifs nécessaires pour décoder une prochaine image à afficher signifie que des images différentes doivent être successivement stockées dans une même mémoire trame, et qu'il faut écraser au fur et à mesure des données correspondant à une image décodée ; cet écrasement signifie la perte des données d'une image décompressée de l'image décodée qu'il faudra peut-être à nouveau décoder ultérieurement.

Ci-après, l'invention propose d'appliquer pour le décodage d'une prochaine image à afficher (que l'on appelle ci-dessous "l'image cible"), les critères suivants pour choisir la mémoire de trame à utiliser pour stocker les données d'une nouvelle image dans le cas où aucune des mémoires de trame n'est vide :
- on écrase en priorité les données d'une image qui a déjà été affichée et qui ne sera pas réutilisée pour le décodage d'une prochaine image à afficher, d'après la table d'indexation 11,
- à défaut, on écrase les données d'une image I ou P non nécessaire au décodage en cours, qui ne doit pas être affichée avant l'image cible et qui présente un coût de décodage minimum, le coût de décodage étant défini ci-dessous.

Dans un exemple de mise en oeuvre, le coût de décodage d'une image est de :
- 1 pour une image I,
- n+1 pour une image P prédite à partir de n images de référence,
- 1 pour les images B.

La figure 5 représente une liste d'images référencées dans la table d'indexation représentée sur le tableau de la figure 4. Un certain nombre de ces images constituent un GOP. Les flèches représentent comment sont prédites les images de type P et B, les flèches pointant d'une image de référence vers l'image prédite correspondante. Ainsi les images de référence de B2 sont P3 et 11, de B4 sont P3 et P5, de B6 sont P5 et P7 ; l'image de référence de P3 est 11, celle de P5 est P3 etc. Les coûts en décodage pour les images I1, P3, P5, P7, P9 , P11 sont respectivement 1, 2, 3, 4, 5 et 6. le coût en décodage d'une image de type B est de 1.

De préférence, on applique également des règles pour optimiser le nombre d'opérations de décodage à réaliser en fonction de celles qui ont déjà été effectuées et dont le résultat est encore disponible, en comparant le contenu des mémoires de trames à l'image cible à décoder :
- si l'image cible est présente dans une au moins des mémoires de trame car elle a servi à un décodage précédent, l'image cible est disponible et n'a pas besoin d'être décodée ;
- sinon on compare le contenu des mémoires de trames à la liste de reconstruction associée à la prochaine image cible et ;
- si aucune image de la liste de reconstruction associée n'est présente dans l'une au moins des mémoires de trame, on réalise l'étape 242 à partir de l'image I point d'accès direct de la liste de reconstruction associée ;
- sinon on réalise l'étape 242 mais en débutant le décodage MPEG en marche avant à partir de l'image (ou des images dans le cas où l'image cible est une image B) de plus fort coût de décodage de la liste de reconstruction contenue dans une des mémoires de trame de décodage et non plus à partir de l'image I. La liste de reconstruction générée à l'étape 241 ne contient que les autres images à décoder. Par exemple, P11 étant prédite de P9, elle-même de P7, elle-même de P3, elle-même de I1, si P3 est disponible dans une mémoire de trame, alors la liste de reconstruction générée par le décodage de B4 ne comportera que trois images : P7, P9 et P11.

Le fait de ne disposer que d'un nombre limité de mémoires de trame nécessite donc une certaine synchronisation entre le processus de décodage et le processus d'affichage. Le nombre d'images à afficher qui sont décodées en avance par rapport à celle en cours d'affichage n'est pas déterministe. En effet, on rappelle que les processus d'affichage et de décodage se font en parallèle mais de façon non indépendante : le module d'affichage affiche la prochaine image à afficher si elle est disponible, sinon il attend qu'elle ait été décodée par le décodeur. Le décodeur, quant à lui, décode les prochaines images à afficher en avance par rapport à l'affichage, tant que l'ensemble des images identifiées à l'étape 22 ne sont pas prêtes à être affichées, et tant que des mémoires de trames sont disponibles pour ce faire, sinon il attend qu'une mémoire de trame puisse être utilisée.

On va maintenant illustrer ces derniers aspects, en considérant à nouveau la portion de flux à décoder et afficher illustrée par le tableau de la figure 4 : le but est de décoder et d'afficher l'image I1 d'identifiant 65532 à l'image B4 d'identifiant 65511 ; la vitesse d'affichage est la vitesse x1 et le nombre de mémoires de trames est égal à 4.

Supposons que l'image I1 d'identifiant 65532 est en cours d'affichage, que les mémoires de trame nommées respectivement T1, T2, T3, T4 contiennent respectivement les images I1 d'identifiant 65520 (T1), P5 d'identifiant 65524 (T2), P3 d'identifiant 65522 (T3) et I1 d'identifiant 65532 (T4), et que la prochaine image à afficher est l'image P11 d'identifiant 65530 (l'image d'identifiant 65531 n'étant pas complète). Le but du décodage est d'obtenir l'image P11 d'identifiant 65530 qui n'a pas encore été décodée, puis les images à afficher par la suite tant que des mémoires de trame sont disponibles.

Pour décoder P11 d'identifiant 65530 qui a pour liste de reconstruction {I1, P3, P5, P7, P9, P11}, on démarre le décodage à partir de P5 d'identifiant 65524 qui est disponible dans la mémoire de trame T2. Dans T1, on écrase I1 d'identifiant 65520 qui est l'image non en cours d'affichage ayant le coût de décodage le plus faible pour décoder P7 d'identifiant 65526. Puis on décode P9 d'identifiant 65528 qui est de la même façon est stockée dans T3 en écrasant P3 d'identifiant 65522, qui est alors l'image non encore affichée ayant le coût de décodage le plus faible. Puis on décode P11 d'identifiant 65530 qui est stockée dans T2, en écrasant P5 d'identifiant 65524 pour les mêmes raisons.

Si la synchronisation verticale survient à ce stade, l'image P11 d'identifiant 65530 peut être affichée. L'image I1 d'identifiant 65532 n'est plus affichée et n'est plus une image de référence pour une prochaine image à afficher; elle peut donc être écrasée. La prochaine image à afficher est B10 d'identifiant 65529, décodée à partir de P9 et P11 qui sont disponibles respectivement dans les mémoires de trames T2 et T3. la liste de reconstruction de B10 ne contient qu'une image, à savoir elle-même. Donc B10 est stockée dans T4 à la place de I1 en attendant la prochaine synchronisation du signal de synchronisation verticale.

L'image à décoder suivante est P9 d'identifiant 65528, disponible dans la mémoire de trame T2. La prochaine image à décoder est ensuite B8, décodée à partir de P9 et P7. La liste de reconstruction ne contient qu'une seule image : elle-même. Or, à ce stade les mémoires T1, T2, T3, T4 contiennent respectivement les images P7, P9, P11 et B10 et c'est P11 qui est en cours d'affichage. Aucune mémoire de trame n'est donc disponible pour stocker B10. Il faut donc attendre la prochaine synchronisation verticale pour décoder cette image, qui sera stockée dans la mémoire de trame T3.

Avantageusement, on peut partager la mémoire tampon 2 en deux sous-mémoires ou bancs de mémoire et exécuter les étapes 24 et 25 sur une première portion du flux de données contenue dans une première sous-mémoire, en même temps que sont exécutées les étapes 22 et 23 sur une seconde portion (venant après dans l'ordre d'affichage en marche arrière) dudit flux de données, cette portion suivante étant contenue dans une seconde sous-mémoire. Lors de cette étape 22, on compare le contenu des deux sous-mémoires pour s'assurer que lesdites première et seconde portions du flux sont bien consécutives, et la table d'indexation pour la première portion du flux dans la première sous-mémoire est complétée et mise à jour avec les nouvelles informations relatives à la deuxième portion du flux, tandis que les informations relatives aux images déjà affichées et qui ne sont plus utilisées par la suite sont effacées.

Une seule table d'indexation est ainsi considérée et contient les informations utiles concernant les deux portions du flux considérées.

Avantageusement, les deux portions du flux peuvent se chevaucher partiellement, afin de trouver une image commune sur laquelle la jonction puisse être faite, ce qui permet de contourner la difficulté à réaliser des découpages précis du flux. Ceci est avantageux, en particulier pour un flux de données embrouillées.

Chacune des portions du flux de données n'est à nouveau remplacée qu'une fois seulement que l'ensemble des images contenues dans ladite portion a pu être affiché et n'est plus nécessaire pour le décodage des images contenues dans l'autre portion.

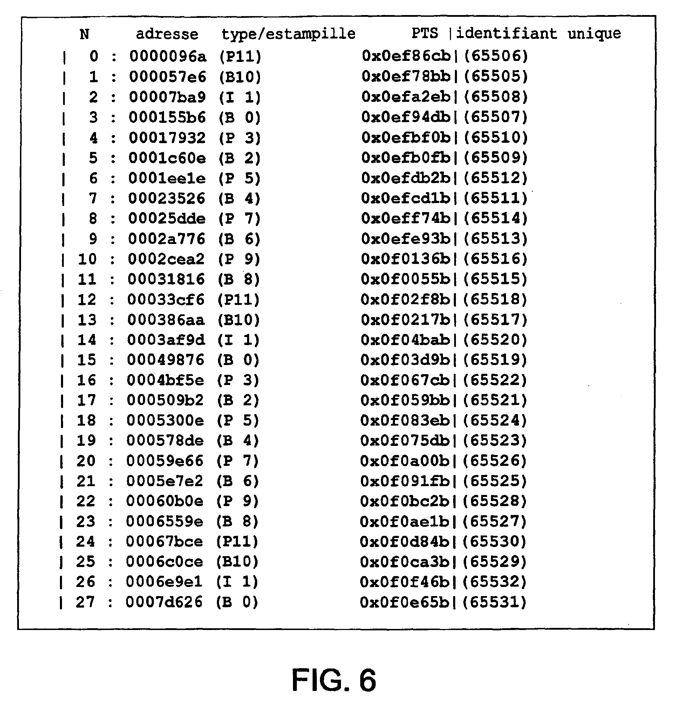

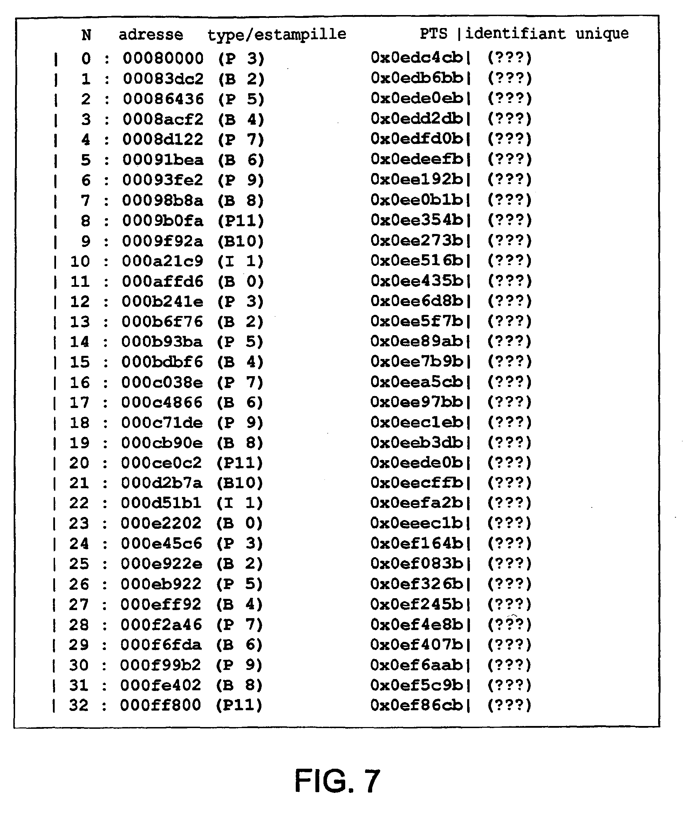

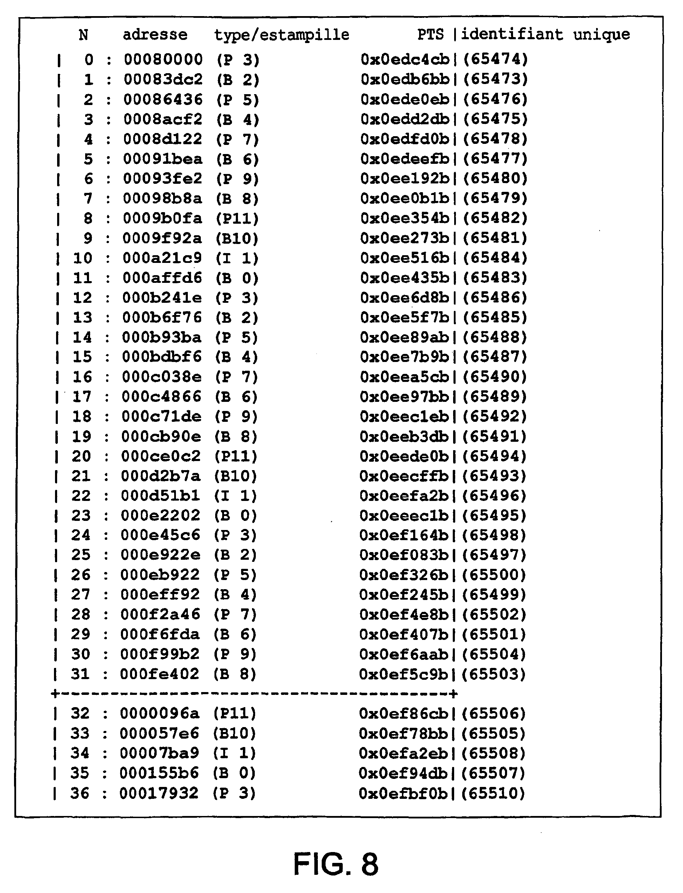

La figure 6 illustre le contenu d'une table d'indexation d'une première sous-mémoire sur laquelle le processus de décodage a lieu tandis qu'une nouvelle portion de flux illustrée par la figure 7 est chargée dans l'autre sous-mémoire, cette nouvelle portion du flux correspondant aux images à afficher suivantes dans l'ordre d'affichage en marche arrière. La dernière image de la nouvelle portion n'est pas complète mais ce n'est pas problématique car cette image est toujours disponible en tant que première image de l'autre portion. La jonction entre les deux portions de flux est faite au niveau de cette image. Puis l'étape 22 est effectuée en mettant à jour la liste d'indexation de laquelle ont été en outre retirées les images de la première portion de flux qui ont déjà été décodées et affichées : la liste résultante est illustrée par le tableau de la figure 8.

Une fois que les images d'identifiant 66506 à 65510 sont affichées, une nouvelle portion de flux est chargée dans la première sous-mémoire.

La taille de chaque sous-mémoire peut être comprise par exemple entre 512 kilooctets et 1 Mégaoctets, ce qui leur permet de stocker au moins un GOP.

Le procédé exposé ci-dessus fournit des méthodes pour décoder de façon optimisée toutes les images à afficher en marche arrière. Certaines portions de flux, par exemple celles ayant beaucoup d'images prédites et peu de points d'accès direct nécessiteraient toutefois pour être décodées en totalité, à la fois une capacité mémoire allouée très importante et un décodeur très rapide. L'invention propose par conséquent des critères de décision ayant pour conséquence le non-décodage et donc le non-affichage de certaines portions de flux.

Tout d'abord, lorsque deux portions consécutives de flux ne contiennent pas de point d'accès direct, les portions sont considérées comme non décodables et les mémoires tampons sont alors chargées avec de nouvelles portions de flux. En outre, si une erreur dans le flux est détectée par exemple en causant une violation de syntaxe dans le processus de décodage, l'image concernée est écartée du décodage et également les images à partir de cette image (identifiées dans les étapes 22 et 23) s'il s'agit d'une image I ou P.

Ensuite, certaines images présentant des coûts de décodage élevé (7 ou 8), il est possible qu'un décodeur standard disposant d'une capacité mémoire de quatre mémoires de trame ne puisse fournir au dispositif d'affichage l'image décodée, dans le temps théorique associé à la vitesse d'affichage choisie par l'utilisateur (par exemple 25 images par seconde pour une vitesse d'affichage x1). Dans ce cas le dispositif d'affichage gèle l'image en cours d'affichage et continue l'affichage du programme dès que l'image suivante est disponible.

En outre, un mode de mise en oeuvre avantageux du procédé de l'invention propose le calcul du retard éventuellement pris par rapport à une vitesse d'affichage commandé et la détermination, à l'étape 241, de la prochaine image à afficher de manière à annuler le retard. L'anulation du retard est obtenue en sautant des images (c'est-à-dire en ne les décodant pas et en ne les affichant pas), par exemple selon les règles de priorité suivantes :
- on saute en priorité une ou plusieurs images B ;
- si le saut d'images B ne suffit pas pour annuler le retard, on saute une ou plusieurs images P ;
- si le saut d'images P ne suffit toujours pas pour annuler le retard, on saute une portion du flux de données compressées lors de la lecture, à l'étape 21, d'une prochaine partie de ce flux de données sur le support numérique de stockage de masse.

Ces mécanismes de calcul de retard et de saut permettent de garder le même algorithme de décodage en marche arrière quelle que soit la vitesse de lecture en marche arrière choisie par l'uitlisateur ; en cas de lecture à vitesse rapide, les sauts peuvent être fréquents.

Par exemple, en considérant à nouveau la liste d'images à afficher illustrée par le tableau de la figure 4, on suppose que l'image I1 d'identifiant 65532 est en cours d'affichage, que la vitesse d'affichage en marche arrière est x1 et que le décodage de l'image à afficher ensuite, c'est-à-dire P11 d'identifiant 65530, qui a un coût de décodage important. Supposons en outre que le décodeur a une vitesse relativement lente et fournit l'image P11 décodée avec un certain retard par rapport à la vitesse d'affichage, pendant lequel le dispositif gèle l'image I1. Alors au lieu de décoder l'image B10 d'identifiant 65529, il va directement passer au décodage de l'image P9 d'identifiant 65528.

Avec des vitesses d'affichage en marche arrière différentes de la vitesse x1, mais avec des rapports entre la vitesse x1 et la vitesse sélectionnée de type M/N, où M et N sont entiers, en considérant cette fois-ci l'image au niveau de ses deux trames, on peut déterminer quelle trame est la plus proche de celle à afficher à la vitesse nominale et ainsi apprécier le retard.

Par exemple, avec une vitesse x2, on n'affiche qu'une image sur deux, avec une vitesse x3, on affiche une image, on saute les deux suivantes. Avec une vitesse x0,5, on affiche la même image deux fois.

## Revendications

1. Procédé de décodage et d'affichage en marche arrière d'images d'un flux de données d'images compressées selon la norme MPEG-2 utilisant un nombre déterminé N de mémoires de trame adaptées chacune pour stocker une image décodée, où N est un nombre entier supérieur ou égal à 4, le dit flux de données contenant des images codées du type I et des images codées du type P et B, **caractérisé en ce que** les règles suivantes sont appliquées lorsqu'une image stockée dans une mémoire de trame doit être écrasée pour permettre le stockage d'une nouvelle image à décoder:
- on écrase en priorité les données d'une mémoire de trame dans laquelle est stockée une image obsolète c'est-à-dire une image qui a déjà été affichée et qui n'est plus nécessaire pour effectuer un prochain décodage d'image ou, à défaut,
- on écrase en priorité les données d'une mémoire de trame dans laquelle est stockée une image qui présente un coût de décodage minimum, le dit coût de décodage étant calculé en fonction du nombre d'images de référence nécessaires pour le décodage de l'image,
- les données d'une mémoire de trame dans laquelle est stockée une image qui est en cours d'affichage ne peuvent pas être écrasées,
- les données d'une mémoire de trame dans laquelle est stockée une image qui est prête pour l'affichage mais n'a pas encore été affichée ne peuvent pas être écrasées,
- les données d'une mémoire de trame dans laquelle est stockée une image de référence nécessaire pour le décodage de ladite nouvelle image à décoder ne peuvent pas non plus être écrasées,
- si les données d'aucune mémoire de trame ne peuvent être écrasées en application des règles précédentes, on suspend le décodage jusqu'à l'affichage d'une image prête pour l'affichage et on évalue à nouveau ces règles après cet affichage.

2. Procédé selon la revendication 1, **caractérisé en ce que** les images de type I présentent un premier coût de décodage déterminé, **en ce que** les images de type P prédites à partir d'une image de type I présentent un deuxième coût de décodage, supérieur audit premier coût de décodage, et **en ce que** les images de type P prédites à partir d'une autre image de type P présentent un coût de décodage supérieur au coût de décodage de ladite autre image de type P.

3. Procédé selon la revendication 2, **caractérisé en ce que** les images de type B présentent ledit premier coût de décodage.

4. Procédé selon l'une quelconque des revendications précédentes, **caractérisé en ce qu'**on vérifie si une nouvelle image à décoder n'est pas déjà stockée dans l'une quelconque des mémoires de trame avant de décoder ladite nouvelle image.

5. Procédé selon l'une quelconque des revendications précédentes, **caractérisé en ce qu'**il comprend des étapes consistant à :
- déterminer à chaque événement de synchronisation d'affichage d'image si une image prête pour l'affichage est présente dans les mémoires de trames,
- si oui, afficher ladite image et la marquer comme obsolète si elle n'est plus nécessaire pour effectuer un décodage d'image,
- et si non, répéter l'affichage de l'image affichée à l'événement de synchronisation d'affichage d'image précédent.

6. Procédé selon l'une quelconque des revendications précédentes, **caractérisé en ce que** le flux de données compressées est lu par portions à partir d'un support numérique de stockage de masse, en réponse à une commande de lecture en marche arrière.

7. Procédé selon l'une quelconque des revendications précédentes, **caractérisé en ce qu'**il comprend les étapes consistant à :
a) charger (21) une portion du flux dans une mémoire tampon ;
b) analyser (22) ladite portion du flux afin d'identifier un point d'accès d'un groupe d'images décodable et de déterminer au moins pour chacune des images dudit groupe, des informations incluant l'adresse de l'image dans la mémoire tampon, une estampille temporelle de présentation associée à un ordre d'affichage de l'image en marche avant, et le type I, P ou B de l'image, et stocker lesdites informations dans une table d'indexation ;
c) obtenir une table d'indexation enrichie en complétant la table d'indexation obtenue à l'étape b en précisant pour chaque image de type P ou B sa ou ses images de référence ;
d) à partir de la table d'indexation, déterminer pour une prochaine image à afficher, une liste de reconstruction qui est une liste ordonnée des images de référence à décoder séquentiellement à partir dudit point d'accès pour obtenir ladite prochaine image à afficher ;
e) à partir de ladite liste de reconstruction, obtenir ladite prochaine image à afficher en décodant tout ou partie des images de ladite liste de reconstruction.

8. Procédé selon la revendication 7, **caractérisé en ce qu'**il comprend, entre l'étape b) et l'étape c), l'attribution (23) à chacune des images codées dans ladite première portion du flux d'un numéro d'identification unique permettant de l'identifier de manière univoque dans le flux.

9. Procédé selon la revendication 8, suivant lequel, à l'étape d), la prochaine image à afficher est déterminée (25) à partir de son numéro d'identification.

10. Procédé selon l'une quelconque des revendications 7 à 9, **caractérisé en ce que**, pour obtenir la prochaine image à afficher, on vérifie si l'une au moins des images de la liste de reconstruction associée à la prochaine image à afficher n'est pas déjà stockée dans l'une quelconque des mémoires de trame, et **en ce que**, dans l'affirmative, on commence à décoder séquentiellement les images de ladite liste non pas à partir du point d'accès du groupe d'images décodable mais à partir de ladite image déjà stockée, ou, le cas échéant, à partir de celle desdites images déjà stockées qui présente le coût de décodage le plus élevé.

11. Procédé selon l'une quelconque des revendications 7 à 10, **caractérisé en ce que**, à chaque fois qu'une image est affichée, on calcule un retard par rapport à une vitesse d'affichage théorique, et **en ce que**, à l'étape d), on détermine la prochaine image à afficher de manière à annuler le retard en sautant des images, selon les règles de priorité suivantes :
- on saute en priorité une ou plusieurs images B ;
- si un ou des sauts d'images B ne suffit pas pour annuler le retard, on saute une ou plusieurs images P ;
- si un ou des sauts d'images P ne suffit pas pour annuler le retard, on saute une ou plusieurs portions du flux de données lors du chargement, à l'étape a), d'une prochaine portion du flux de données dans la mémoire tampon.

12. Procédé selon l'une quelconque des revendications 7 à 11, **caractérisé en ce que** la mémoire tampon comprend un premier et un second bancs de mémoire, et **en ce que** les étapes d) et e) sont réalisées dans ledit premier banc de mémoire de la mémoire tampon pour une première portion du flux, pendant que les étapes a) à c) sont réalisées dans ledit second banc de mémoire de la mémoire tampon pour une seconde portion du flux.

13. Procédé selon la revendication 12, **caractérisé en ce que**, les données stockées dans l'un ou l'autre des premier et second bancs de mémoire ne sont pas écrasés à l'étape a) tant que ces données sont encore nécessaires au traitement des données contenues dans l'autre desdits premier et second bancs de mémoire.

14. Procédé selon la revendication 12 ou la revendication 13, **caractérisé en ce que** les données stockées dans l'un ou l'autre des premier et second bancs de mémoire sont écrasés avec une nouvelle portion du flux à l'étape a), dès que ces données ne sont plus nécessaires au traitement des données contenues dans l'autre desdits premier et second bancs de mémoire.

15. Procédé selon l'une quelconque des revendications 12 à 14, **caractérisé en ce que** les portions de flux chargées dans le premier banc de mémoire et dans le second banc de mémoire se chevauchent, et **en ce qu'**une jonction entre ces deux portions peut être réalisée entre les deux parties de flux au niveau d'une image commune.

16. Procédé selon les revendications 12 à 15, **caractérisé en ce que** les tables d'indexation relatives à chacune des portions de flux chargées dans le premier banc de mémoire et dans le second banc de mémoire constituent une seule table d'indexation

17. Dispositif de décodage et d'affichage en marche arrière d'images d'un flux de données d'images compressées selon la norme MPEG-2 comprenant un nombre déterminé N de mémoires de trame adaptée chacune pour stocker une image décodée, où N est un nombre entier supérieur ou égal à 4, le dit flux de données contenant des images codées du type I et des images codées du type P et B, **caractérisé en ce qu'**il comprend des moyens pour appliquer les règles suivantes lorsqu'une image stockée dans une mémoire de trame doit être écrasée pour permettre le stockage d'une nouvelle image à décoder :
- on écrase en priorité les données d'une mémoire de trame dans laquelle est stockée une image qui a déjà été affichée et qui n'est plus nécessaire pour effectuer un décodage d'image ou, à défaut,
- on écrase en priorité les données d'une mémoire de trame dans laquelle est stockée une image qui présente un coût de décodage minimum, le dit coût de décodage étant calculé en fonction du nombre d'images de référence nécessaires pour le décodage de l'image,
- les données d'une mémoire de trame dans laquelle est stockée une image qui est en cours d'affichage ne peuvent pas être écrasées,
- les données d'une mémoire de trame dans laquelle est stockée une image qui est prête pour l'affichage mais n'a pas encore été affichée ne peuvent pas être écrasées,
- les données d'une mémoire de trame dans laquelle est stockée une image de référence nécessaire pour le décodage de ladite nouvelle image à décoder ne peuvent pas non plus être écrasées,
- si les données d'aucune mémoire de trame ne peuvent être écrasées en application des règles précédentes, on suspend le décodage jusqu'à l'affichage d'une image prête pour l'affichage et on évalue à nouveau ces règles après cet affichage.

18. Dispositif selon la revendication 17, **caractérisé en ce qu'**il comprend des moyens de calcul du coût en décodage d'une image donnée, les images de type I présentant un premier coût de décodage déterminé, les images de type P prédites à partir d'une image de type I présentant un deuxième coût de décodage, supérieur audit premier coût de décodage, et les images de type P prédites à partir d'une autre image de type P présentant un coût de décodage supérieur au coût de décodage de ladite autre image de type P.

19. Dispositif selon la revendication 18, **caractérisé en ce que** les moyens de calcul du coût en décodage fournissent ledit premier coût de décodage pour les images de type B.

20. Dispositif selon l'une quelconque des revendications 17 à 19, **caractérisé en ce qu'**il comprend des moyens pour vérifier qu'une nouvelle image à décoder n'est pas déjà stockée dans l'une quelconque des mémoires de trame avant de décoder ladite nouvelle image.

21. Dispositif selon l'une quelconque des revendications 17 à 20, **caractérisé en ce qu'**il comprend des moyens pour :
- déterminer à chaque événement de synchronisation d'affichage d'image si une image prête pour l'affichage est présente dans les mémoires de trames,
- si oui, afficher ladite image et la marquer comme obsolète si elle n'est plus nécessaire pour effectuer un décodage d'image,
- et si non, répéter l'affichage de l'image affichée à l'événement de synchronisation d'affichage d'image précédent.

22. Dispositif selon l'une quelconque des revendications 17 à 21, **caractérisé en ce qu'**il comprend des moyens pour lire le flux de données compressées par portions à partir d'un support numérique de stockage de masse, en réponse à une commande de lecture en marche arrière.

23. Dispositif selon l'une quelconque des revendications 17 à 22, **caractérisé en ce qu'**il comprend :
a) des moyens pour charger une portion du flux dans une mémoire tampon ;
b) des moyens pour analyser ladite portion du flux afin d'identifier un point d'accès d'un groupe d'images décodable et de déterminer au moins pour chacune des images dudit groupe, des informations incluant l'adresse de l'image dans la mémoire tampon, une estampille temporelle de présentation associée à un ordre d'affichage de l'image en marche avant, et le type I, P ou B de l'image, et stocker lesdites informations dans une table d'indexation ;
c) des moyens pour obtenir une table d'indexation enrichie en complétant la table d'indexation obtenue à l'étape b en précisant pour chaque image de type P ou B sa ou ses images de référence ;
d) des moyens pour déterminer à partir de la table d'indexation, pour une prochaine image à afficher, une liste de reconstruction qui est une liste ordonnée des images de référence à décoder séquentiellement à partir dudit point d'accès pour obtenir ladite prochaine image à afficher ;
e) des moyens pour obtenir à partir de ladite liste de reconstruction, ladite prochaine image à afficher en décodant tout ou partie des images de ladite liste de reconstruction.

24. Dispositif selon la revendication 23 **caractérisé en ce que** lesdits moyens pour attribuer les numéros d'identification aux images codées dans le flux attribuent lesdits numéros de façon séquentielle, suivant l'ordre d'affichage des images.

25. Dispositif selon la revendication 24, suivant lequel lesdits moyens pour déterminer déterminent la prochaine image à afficher à partir de son numéro d'identification.

26. Dispositif selon l'une quelconque des revendications 23 à 25, **caractérisé en ce que** lesdits moyens pour obtenir la prochaine image à afficher comprennent des moyens pour vérifier si l'une au moins des images de la liste de reconstruction associée à la prochaine image à afficher n'est pas déjà stockée dans l'une quelconque des mémoires de trame, et, dans l'affirmative, des moyens pour commencer à décoder séquentiellement les images de ladite liste non pas à partir du point d'accès du groupe d'images décodable mais à partir de ladite image déjà stockée, ou, le cas échéant, à partir de celle desdites images déjà stockées qui présente le coût de décodage le plus élevé.

27. Dispositif selon l'une quelconque des revendications 23 à 26, **caractérisé en ce qu'**il comprend des moyens pour, à chaque fois qu'une image est affichée, calculer un retard par rapport à une vitesse d'affichage théorique, et des moyens pour déterminer la prochaine image à afficher de manière à annuler le retard en sautant des images selon les règles de priorité suivantes :
- on saute en priorité une ou plusieurs images B ;
- si un ou des sauts d'images B ne suffit pas pour annuler le retard, on saute une ou plusieurs images P ;
- si un ou des sauts d'images P ne suffit pas pour annuler le retard, on saute une ou plusieurs portions du flux de données lors du chargement d'une prochaine portion du flux de données dans la mémoire tampon.

28. Dispositif selon l'une quelconque des revendications 23 à 27, **caractérisé en ce que** la mémoire tampon comprend un premier et un second bancs de mémoire, et **en ce que** lesdits moyens pour changer et lesdits moyens pour analyser opèrent dans ledit premier banc de mémoire de la mémoire tampon pour une première portion du flux, pendant que lesdits moyens pour obtenir la table d'indexation, et lesdits moyens pour obtenir la prochaine image à afficher opèrent dans ledit second banc de mémoire de la mémoire tampon pour une seconde portion du flux.

29. Dispositif selon la revendication 28, **caractérisé en ce qu'**il comprend des moyens pour empêcher d'écraser les données stockées dans l'un ou l'autre des premier et second bancs de mémoire tant que ces données sont encore nécessaires au traitement des données contenues dans l'autre desdits premier et second bancs de mémoire.

30. Dispositif selon la revendication 28 ou la revendication 29, **caractérisé en ce qu'**il comprend des moyens pour écraser les données stockées dans l'un ou l'autre des premier et second bancs de mémoire avec une nouvelle portion du flux à l'étape a), dès que ces données ne sont plus nécessaires au traitement des données contenues dans l'autre desdits premier et second bancs de mémoire.

31. Dispositif selon l'une quelconque des revendications 28 à 30, **caractérisé en ce qu'**il comprend des moyens pour que les portions de flux chargées dans le premier banc de mémoire et dans le second banc de mémoire se chevauchent, et pour pouvoir réaliser une jonction entre ces deux portions au niveau d'une image commune.

32. Dispositif selon les revendications 28 à 31, **caractérisé en ce qu'**il comprend des moyens pour réunir en une seule table d'indexation les tables d'indexation relatives à chacune des portions de flux chargées dans le premier banc de mémoire et dans le second banc de mémoire.

33. Circuit pilote vidéo **caractérisé en ce qu'**il comprend un dispositif selon l'une des revendications 17 à 32.

34. Boîtier décodeur **caractérisé en ce qu'**il comprend un circuit pilote vidéo selon la revendication 33.

## Claims

1. Process for decoding and for displaying in rewind mode images of a stream of image data compressed according to the MPEG-2 standard using a specified number N of frame memories each adapted for storing a decoded image, where N is an integer greater than or equal to 4, said stream of image data containing coded images of type I and coded images of type P and B,
**characterized in that** the following rules are applied when an image stored in a frame memory is to be overwritten so as to allow the storage of a new image to be decoded:
- data of a frame memory in which an obsolete image is stored, that is to say an image which has already been displayed and which is no longer required for performing a next image decoding, are overwritten by priority or, failing this,
- data of a frame memory, in which an image which exhibits a minimum decoding cost is stored, are overwritten by priority, said decoding cost being calculated based on the number of reference images which are necessary for the decoding of the image,
- data of a frame memory, in which an image which is currently being displayed is stored, cannot be overwritten,
- data of a frame memory, in which an image which is ready for display but has not yet been displayed is stored, cannot be overwritten,
- data of a frame memory, in which a reference image required for the decoding of the said new image to be decoded is stored, also cannot be overwritten,
- if data of no frame memory can be overwritten by applying the above rules, the decoding is suspended until the displaying of an image which is ready for display and these rules are re-evaluated after this display.

2. Process according to Claim 1, **characterized in that** the type I images exhibit a first specified decoding cost, **in that** the type P images predicted from a type I image exhibit a second decoding cost, greater than the said first decoding cost, and **in that** the type P images predicted from another type P image exhibit a decoding cost greater than the decoding cost of the said other type P image.

3. Process according to Claim 2, **characterized in that** the type B images exhibit the said first decoding cost.

4. Process according to any one of the preceding claims, **characterized in that** a check is carried out to verify whether a new image to be decoded is not already stored in any one of the frame memories before decoding the said new image.

5. Process according to any one of the preceding claims, **characterized in that** it comprises steps consisting in:
- determining at each image display synchronization event whether an image which is ready for display is present in the frame memories,
- if so, displaying the said image and marking it as obsolete if it is no longer required in order to perform an image decoding,
- and if not, repeating the displaying of the image displayed at the previous image display synchronization event.

6. Process according to any one of the preceding claims, **characterized in that** the compressed data stream is read in portions from a mass storage digital medium, in response to a rewind mode read command.

7. Process according to any one of the preceding claims, **characterized in that** it comprises the steps consisting in:
a) loading (21) a portion of the stream into a buffer memory;
b) analysing (22) the said portion of the stream so as to identify an access point of a decodable group of pictures and to determine at least for each of the pictures of the said group, information including the address of the picture in the buffer memory, a presentation time stamp associated with an order of forward display of the image, and the type I, P or B of the image, and storing the said information in an indexation table;
c) obtaining an enhanced indexation table by supplementing the indexation table obtained in step b by specifying for each image of type P or B its reference image or images;
d) from the indexation table, determining for a next image to be displayed, a reconstruction list which is an ordered list of the reference images to be decoded sequentially onwards of the said access point so as to obtain the said next image to be displayed;
e) from the said reconstruction list, obtaining the said next image to be displayed by decoding all or some of the images of the said reconstruction list.

8. Process according to Claim 7, **characterized in that** it comprises, between step b) and step c), the allocating (23) to each of the coded images in the said first portion of the stream of a unique identification number enabling it to be identified unequivocally in the stream.

9. Process according to Claim 8, according to which, in step d), the next image to be displayed is determined (25) from its identification number.

10. Process according to any one of Claims 7 to 9, **characterized in that,** to obtain the next image to be displayed, a check is carried out to verify whether one at least of the images of the reconstruction list associated with the next image to be displayed is not already stored in any one of the frame memories, and **in that**, if so, the sequential decoding of the images of the said list is commenced not from the access point of the decodable group of images but from the said already stored image, or, as appropriate, from that of the said already stored images which exhibits the highest decoding cost.

11. Process according to any one of Claims 7 to 10, **characterized in that,** each time an image is displayed, a delay with respect to a theoretical display speed is calculated, and **in that**, in step d), the next image to be displayed is determined in such a way as to cancel the delay by skipping images, according to the following priority rules:
- one or more B images is or are skipped by priority;
- if one or more skips of B images is or are not sufficient to cancel the delay, then one or more P images is or are skipped;
- if one or more skips of P images is or are not sufficient to cancel the delay, then one or more portions of the data stream is or are skipped during the loading, in step a), of a next portion of the data stream into the buffer memory.

12. Process according to any one of Claims 7 to 11, **characterized in that** the buffer memory comprises a first and a second memory bank, and **in that** steps d) and e) are carried out in the said first memory bank of the buffer memory for a first portion of the stream, while steps a) to c) are carried out in the said second memory bank of the buffer memory for a second portion of the stream.

13. Process according to Claim 12, **characterized in that** data stored in one or the other of the first and second memory banks are not overwritten in step a) as long as these data are still required for the processing of the data contained in the other of the said first and second memory banks.

14. Process according to Claim 12 or Claim 13, **characterized in that** data stored in one or the other of the first and second memory banks is overwritten with a new portion of the stream in step a), as soon as these data are no longer required for the processing of the data contained in the other of the said first and second memory banks.

15. Process according to any one of Claims 12 to 14, **characterized in that** the stream portions loaded into the first memory bank and into the second memory bank overlap, and **in that** a join between these two portions can be effected between the two parts of the stream at the level of a common image.

16. Process according to Claims 12 to 15, **characterized in that** the indexation tables relating to each of the stream portions loaded into the first memory bank and into the second memory bank constitute a single indexation table.

17. Device for decoding and for displaying in rewind mode images of a stream of image data compressed according to the MPEG-2 standard comprising a specified number N of frame memories each adapted for storing a decoded image, where N is an integer greater than or equal to 4, said stream of image data containing coded images of type I and coded images of type P and B,
**characterized in that** it comprises means for applying the following rules when an image stored in a frame memory is to be overwritten so as to allow the storage of a new image to be decoded:
- data of a frame memory in which an image is stored which has already been displayed and which is no longer required for performing an image decoding are overwritten by priority or, failing this,
- data of a frame memory, in which an image which exhibits a minimum decoding cost is stored, are overwritten by priority, said decoding cost being calculated based on the number of reference images which are necessary for the decoding of the image,
- data of a frame memory, in which an image which is currently being displayed is stored, cannot be overwritten,
- data of a frame memory, in which an image which is ready for display but has not yet been displayed is stored, cannot be overwritten,
- data of a frame memory, in which a reference image required for the decoding of the said new image to be decoded is stored, also cannot be overwritten,
- if data of no frame memory can be overwritten by applying the above rules, the decoding is suspended until the displaying of an image which is ready for display and these rules are re-evaluated after this display.

18. Device according to Claim 17, **characterized in** it comprises means for calculating the cost for decoding a given image, the type I images exhibiting a first specified decoding cost, the type P images predicted from a type I image exhibiting a second decoding cost, greater than the said first decoding cost, and the type P images predicted from another type P image exhibiting a decoding cost greater than the decoding cost of the said other type P image.

19. Device according to Claim 18, **characterized in that** the means for calculating the cost for decoding supply the said first decoding cost for the type B images.

20. Device according to any one of Claims 17 to 19, **characterized in that** it comprises means for verifying that a new image to be decoded is not already stored in any one of the frame memories before decoding the said new image.

21. Device according to any one of Claims 17 to 20, **characterized in that** it comprises means for:
- determining at each image display synchronization event whether an image which is ready for display is present in the frame memories,
- if so, displaying the said image and marking it as obsolete if it is no longer required in order to perform an image decoding,
- and if not, repeating the displaying of the image displayed at the previous image display synchronization event.

22. Device according to any one of Claims 17 to 21, **characterized in that** it comprises means for reading the compressed data stream in portions from a mass storage digital medium, in response to a rewind mode read command.

23. Device according to any one of Claims 17 to 22, **characterized in that** it comprises :
a) means for loading a portion of the stream into a buffer memory;
b) means for analysing the said portion of the stream so as to identify an access point of a decodable group of pictures and to determine at least for each of the pictures of the said group, information including the address of the picture in the buffer memory, a presentation time stamp associated with an order of forward display of the image, and the type I, P or B of the image, and storing the said information in an indexation table;
c) means for obtaining an enhanced indexation table by supplementing the indexation table obtained in step b by specifying for each image of type P or B its reference image or images;
d) means for determining from the indexation table, for a next image to be displayed, a reconstruction list which is an ordered list of the reference images to be decoded sequentially onwards of the said access point so as to obtain the said next image to be displayed;
e) means for obtaining from the said reconstruction list, the said next image to be displayed by decoding all or some of the images of the said reconstruction list.

24. Device according to Claim 23, **characterized in that** the said means for allocating the identification numbers to the coded images in the stream allocate the said numbers sequentially, according to the order of display of the images.

25. Device according to Claim 24, according to which the said means for determining determine the next image to be displayed from its identification number.

26. Device according to any one of Claims 23 to 25, **characterized in that** the said means for obtaining the next image to be displayed, comprise means for verifying whether one at least of the images of the reconstruction list associated with the next image to be displayed is not already stored in any one of the frame memories, and, if so, means for commencing the sequential decoding of the images of the said list not from the access point of the decodable group of images but from the said already stored image, or, as appropriate, from that of the said already stored images which exhibits the highest decoding cost.

27. Device according to any one of Claims 23 to 26, **characterized in that** it comprises means for, each time an image is displayed, calculating a delay with respect to a theoretical display speed, and means for determining the next image to be displayed in such a way as to cancel the delay by skipping images, according to the following priority rules:
- one or more B images is or are skipped by priority;
- if one or more skips of B images is or are not sufficient to cancel the delay, then one or more P images is or are skipped;
- if one or more skips of P images is or are not sufficient to cancel the delay, then one or more portions of the data stream is or are skipped during the loading of a next portion of the data stream into the buffer memory.

28. Device according to any one of Claims 23 to 27, **characterized in that** the buffer memory comprises a first and a second memory bank, and **in that** the said means for changing and the said means for analysing operate in the said first memory bank of the buffer memory for a first portion of the stream, while the means for obtaining the indexation table, and the said means for obtaining the next image to be displayed operate in the said second memory bank of the buffer memory for a second portion of the stream.

29. Device according to Claim 28, **characterized in that** it comprises means for preventing the overwriting of data stored in one or the other of the first and second memory banks as long as these data are still required for the processing of the data contained in the other of the said first and second memory banks.

30. Device according to Claim 28 or Claim 29, **characterized in that** it comprises means for overwriting data stored in one or the other of the first and second memory banks with a new portion of the stream in step a), as soon as these data are no longer required for the processing of the data contained in the other of the said first and second memory banks.

31. Device according to any one of Claims 28 to 30, **characterized in that** it comprises means such that the stream portions loaded into the first memory bank and into the second memory bank overlap, and so as to be able to effect a join between these two portions at the level of a common image the two parts of the stream.

32. Device according to Claims 28 to 31, **characterized in that** it comprises means for combining into a single indexation table the indexation tables relating to each of the stream portions loaded into the first memory bank and into the second memory bank.

33. Video driver circuit, **characterized in that** it comprises a device according to one of Claims 17 to 32.

34. Decoder box, **characterized in that** it comprises a video driver circuit according to Claim 33.

## Patentansprüche

1. Verfahren zum Dekodieren und zum Rückwärtsanzeigen von Bildern eines Flusses von Daten von nach dem MPEG-2-Standard komprimierten Bildern unter Verwendung einer bestimmten Anzahl N von Rahmenspeichern, von denen jeder angepasst ist, um ein dekodiertes Bild zu speichern, wobei N eine Ganzzahl größer oder gleich 4 ist, wobei der Fluss von Daten kodierte Bilder des Typs I und kodierte Bilder des Typs P und B umfasst,
**dadurch gekennzeichnet, dass** die folgenden Regeln angewendet werden, wenn ein in einem Rahmenspeicher gespeichertes Bild überschrieben werden muss, um dem Speicher zu ermöglichen, dass ein neues Bild dekodiert wird:
Überschreiben zunächst der Daten eines Rahmenspeichers, in dem ein obsoletes Bild gespeichert ist, d.h. ein Bild, welches bereits angezeigt wurde und welches nicht mehr benötigt wird, um eine nächste Dekodierung eines Bildes durchzuführen; oder
Überschreiben zunächst der Daten eines Rahmenspeichers, in dem ein Bild gespeichert ist, welches minimale Dekodierungskosten darstellt, wobei die Dekodierungskosten entsprechend der Anzahl von Referenzbilder berechnet werden, die für die Dekodierung des Bildes notwendig ist;
die Daten eines Rahmenspeichers, in dem ein Bild gespeichert ist, welches gerade angezeigt wird, können nicht überschrieben werden;
die Daten eines Rahmenspeichers, in dem ein Bild gespeichert ist, welches zum Anzeigen bereit ist, aber noch nicht angezeigt wurde, können nicht überschrieben werden;
die Daten eines Rahmenspeichers, in dem ein Referenzbild gespeichert ist, das für die Dekodierung des zu dekodierenden neuen Bildes benötigt wird, können auch nicht überschrieben werden;
falls die Daten keines Rahmenspeichers unter Anwendung der vorstehenden Regeln nicht überschrieben werden können, wird die Dekodierung bis zur Anzeige eines für die Anzeige bereiten Bildes unterbrochen, und diese Regeln werden nach dieser Anzeige erneut bewertet.

2. Verfahren nach Anspruch 1, wobei die Bilder des Typs I bestimmte erste Dekodierungskosten darstellen, wobei die Bilder des Typs P, die von einem Bild des Typs I prognostiziert wurden, zweite Dekodierungskosten darstellen, die höher als die ersten Dekodierungskosten sind, und wobei die Bilder des Typs P, die von einem anderen Bild des Typs P prognostiziert wurden, Dekodierungskosten darstellen, die höher als die Dekodierungskosten des anderen Bildes des Typs P sind.

3. Verfahren nach Anspruch 2, wobei die Bilder des Typs B die ersten Dekodierungskosten darstellen.

4. Verfahren nach einem der vorstehenden Ansprüche, wobei verifiziert wird, ob ein zu dekodierendes neues Bild nicht bereits in irgendeinen der Rahmenspeicher gespeichert wurde, bevor das neue Bild dekodiert wird.

5. Verfahren nach einem der vorstehenden Ansprüche, ferner mit den folgenden Schritten:
Bestimmen bei jedem Synchronisationsereignis einer Bildanzeige, ob ein für die Anzeige bereites Bild in den Rahmenspeichern vorliegt;
falls dem so ist, Anzeigen des Bildes und Markieren des Bildes als obsolet, falls es zum Durchführen einer Bilddekodierung nicht mehr benötigt wird;
und falls dem nicht so ist, Wiederholen der Anzeige des Bildes, das bei dem Synchronisationsereignis einer vorangegangenen Bildanzeige angezeigt wird.

6. Verfahren nach einem der vorstehenden Ansprüche, wobei der Fluss von komprimierten Daten in Teilen von einem digitalen Massespeicher im Ansprechen auf einen Befehl eines Rückwärtslesens gelesen wird.

7. Verfahren nach einem der vorstehenden Ansprüche, ferner mit den folgenden Schritten:
a) Laden (21) eines Teils des Flusses in einen Pufferspeicher;
b) Analysieren (22) des Teils des Flusses, um einen Zugangspunkt einer dekodierbaren Gruppe von Bildern zu identifizieren und zumindest für jedes der Bilder der Gruppe Informationen einschließlich der Adresse des Bildes in dem Pufferspeicher, einen mit einer Reihenfolge einer Vorwärtsanzeige des Bildes verknüpften Zeitstempel einer Präsentation, und den Typ I, P oder B des Bildes zu bestimmen, und Speichern der Informationen in eine Indexierungstabelle;
c) Erhalten einer erweiterten Indexierungstabelle durch Vervollständigen der im Schritt b) erhaltenen Indexierungstabelle durch Spezifizieren, für jedes Bild des Typs P oder B, seines oder seiner Referenzbilder;
d) Bestimmen von der Indexierungstabelle für ein anzuzeigendes nächstes Bild, einer Rekonstruktionsliste, welche eine Liste ist, die zu dekodierende Referenzbilder von dem Zugangspunkt sequentiell anordnet, um das anzuzeigende nächste Bild zu erhalten;
e) Erhalten von der Rekonstruktionsliste des anzuzeigenden nächsten Bildes durch Dekodieren aller oder eines Teils der Bilder der Rekonstruktionsliste.

8. Verfahren nach Anspruch 7, ferner mit dem folgenden Schritt zwischen den Schritten b) und c):
Zuordnen (23) zu jedem der kodierten Bilder in dem ersten Teil des Flusses einer alleinigen Identifikationsnummer, die eine eindeutige Identifizierungsweise in dem Fluss zulässt.

9. Verfahren nach Anspruch 8, wobei im Schritt d) das anzuzeigende nächste Bild von seiner Identifikationsnummer bestimmt wird (25).

10. Verfahren nach einem der Ansprüche 7 bis 9, wobei zum Erhalten des anzuzeigenden nächsten Bildes verifiziert wird, ob zumindest eines der Bilder der Rekonstruktionsliste, das mit dem anzuzeigenden nächsten Bild verknüpft ist, nicht bereits in irgendeinem der Rahmenspeicher gespeichert wurde, und wobei, wenn dem so ist, mit der sequentiellen Dekodierung der Bilder der Liste nicht von dem Zugangspunkt der dekodierbaren Gruppe von Bildern, sondern von dem bereits gespeicherten Bild, oder gegebenenfalls von den bereits gespeicherten Bildern, welche die höchsten Dekodierungskosten darstellen, begonnen wird.

11. Verfahren nach einem der Ansprüche 7 bis 10, wobei jedes Mal, wenn ein Bild angezeigt wird, eine Verzögerung bezüglich einer theoretischen Anzeigegeschwindigkeit berechnet wird, und wobei im Schritt d) das anzuzeigende nächste Bild derart bestimmt wird, dass die Verzögerung durch Überspringen der Bilder nach den folgenden Prioritätsregeln aufgehoben wird:
Überspringen zunächst eines oder mehrerer Bilder des Typs B;
falls ein oder mehrere übersprungene Bilder des Typs B nicht ausreichen, um die Verzögerung aufzuheben, werden ein oder mehrere Bilder des Typs P übersprungen;
falls ein oder mehrere übersprungene Bilder des Typs P nicht ausreichen, um die Verzögerung aufzuheben, werden ein oder mehrerer Teile des Flusses von Daten während des Ladens in Schritt a) eines nächsten Teils des Flusses von Daten in den Pufferspeicher übersprungen.

12. Verfahren nach einem der Ansprüche 7 bis 11, wobei der Pufferspeicher eine erste und eine zweite Speicherbank aufweist, und wobei die Schritte d) und e) in der ersten Speicherbank des Pufferspeichers für einen ersten Teil des Flusses realisiert werden, während die Schritte a) bis c) in der zweiten Speicherbank des Pufferspeichers für einen zweiten Teil des Flusses realisiert werden.

13. Verfahren nach Anspruch 12, wobei die in der einen oder der anderen der ersten und zweiten Speicherbank gespeicherten Daten in Schritt a) nicht überschrieben werden, solange diese Daten für die Verarbeitung der in der anderen der ersten und zweiten Speicherbank enthaltenen Daten noch benötigt werden.

14. Verfahren nach Anspruch 12 oder 13, wobei die in der einen oder der anderen der ersten und zweiten Speicherbank gespeicherten Daten mit einem neuen Teil des Flusses in Schritt a) überschrieben werden, sobald diese Daten für die Verarbeitung der in der anderen der ersten und zweiten Speicherbank enthaltenen Daten nicht mehr benötigt werden.

15. Verfahren nach einem der Ansprüche 12 bis 14, wobei sich die in die erste Speicherbank und in die zweite Speicherbank geladenen Teile des Flusses überlappen, und wobei eine Verbindung zwischen diesen beiden Teilen einen Fluss auf dem Pegel eines gewöhnlichen Bildes zwischen den beiden Teilen realisieren kann.

16. Verfahren nach Anspruch 12 bis 15, wobei die Indexierungstabellen relativ zu jedem der in die erste Speicherbank und in die zweite Speicherbank geladenen Teile des Flusses eine einzelne Indexierungstabelle darstellen.

17. Vorrichtung zur Dekodierung und zur Rückwärtsanzeige von Bildern eines Flusses von Daten von nach dem MPEG-2-Standard komprimierten Bildern mit einer bestimmten Anzahl N von Rahmenspeichern, von denen jeder angepasst ist, um ein dekodiertes Bild zu speichern, wobei N eine Ganzzahl größer oder gleich 4 ist, wobei der Fluss von Daten kodierte Bilder des Typs I und kodierte Bilder des Typs P und B umfasst,
**dadurch gekennzeichnet, dass** sie Einrichtungen zum Anwenden der folgenden Regeln umfasst, wenn ein in einem Rahmenspeicher gespeichertes Bild überschrieben werden muss, um dem Speicher zu ermöglichen, dass ein neues Bild dekodiert wird:
Überschreiben zunächst der Daten eines Rahmenspeichers, in dem ein Bild gespeichert ist, welches bereits angezeigt wurde, und welches nicht mehr benötigt wird, um eine Dekodierung eines Bildes durchzuführen; oder
Überschreiben zunächst der Daten eines Rahmenspeichers, in dem ein Bild gespeichert ist, welches minimale Dekodierungskosten darstellt, wobei die Dekodierungskosten entsprechend der Anzahl von Referenzbildern berechnet wird, die für die Dekodierung des Bildes benötigt wird;
die Daten eines Rahmenspeichers, in dem ein Bild gespeichert ist, welches gerade angezeigt wird, können nicht überschrieben werden;
die Daten eines Rahmenspeichers, in dem ein Bild gespeichert ist, welches zur Anzeige bereit ist, aber noch nicht angezeigt wurde, können nicht überschrieben werden;
die Daten eines Rahmenspeichers, in dem ein Referenzbild gespeichert ist, das für die Dekodierung des zu dekodierenden neuen Bildes benötigt wird, können auch nicht überschrieben werden;
falls die Daten keines Rahmenspeichers unter Anwendung der vorstehenden Regeln nicht überschrieben werden können, wird die Dekodierung bis zur Anzeige eines für die Anzeige bereiten Bildes unterbrochen, und diese Regeln werden nach dieser Anzeige erneut bewertet.

18. Vorrichtung nach Anspruch 17, ferner mit Einrichtungen zum Berechnen der Kosten bei der Dekodierung von Bilddaten, wobei die Bilder des Typs I bestimmte erste Dekodierungskosten darstellen, wobei die Bilder des Typs P, die von einem Bild des Typs I prognostiziert wurden, zweite Dekodierungskosten darstellen, die höher als die ersten Dekodierungskosten sind, und wobei die Bilder des Typs P, die von einem anderen Bild des Typs P prognostiziert wurden, Dekodierungskosten darstellen, die höher als die Dekodierungskosten des anderen Bildes des Typs P sind.

19. Vorrichtung nach Anspruch 18, wobei die Einrichtungen zum Berechnen von Kosten bei der Dekodierung die ersten Dekodierungskosten für die Bilder des Typs B aufbringen.

20. Vorrichtung nach einem der Ansprüche 17 bis 19, ferner mit Einrichtungen zum Verifizieren, dass ein zu dekodierendes neues Bild nicht bereits in irgendeinen der Rahmenspeicher gespeichert wurde, bevor das neue Bild dekodiert wird.

21. Vorrichtung nach einem der Ansprüche 17 bis 20, ferner mit Einrichtungen zum
Bestimmen bei jedem Synchronisationsereignis einer Bildanzeige, ob ein für die Anzeige bereites Bild in den Rahmenspeichern vorliegt;
falls dem so ist, Anzeigen des Bildes und Markieren des Bildes als obsolet, falls es zum Durchführen einer Bilddekodierung nicht mehr benötigt wird;
und falls dem nicht so ist, Wiederholen der Anzeige des Bildes, das bei dem Synchronisationsereignis einer vorangegangenen Bildanzeige angezeigt wird.

22. Vorrichtung nach einem der Ansprüche 17 bis 21, ferner mit Einrichtungen zum Lesen des Flusses von komprimierten Daten in Teilen von einem digitalen Massespeicher im Ansprechen auf einen Befehl eines Rückwärtslesens.

23. Vorrichtung nach einem der Ansprüche 17 bis 22, ferner mit:
a) Einrichtungen zum Laden eines Teils des Flusses in einen Pufferspeicher;
b) Einrichtungen zum Analysieren des Teils des Flusses, um einen Zugangspunkt einer dekodierbaren Gruppe von Bildern zu identifizieren, und zumindest für jedes der Bilder der Gruppe Informationen einschließlich der Adresse des Bildes in dem Pufferspeicher, einen mit einer Reihenfolge einer Vorwärtsanzeige des Bildes verknüpften Zeitstempel einer Präsentation, und den Typ I, P oder B des Bildes zu bestimmen, und Speichern der Informationen in eine Indexierungstabelle;
c) Einrichtungen zum Erhalten einer erweiterten Indexierungstabelle durch Vervollständigen der im Schritt b) erhaltenen Indexierungstabelle durch Spezifizieren, für jedes Bild des Typs P oder B, seines oder seiner Referenzbilder;
d) Einrichtungen zum Bestimmen von der Indexierungstabelle für ein anzuzeigendes nächstes Bild einer Rekonstruktionsliste, welche eine Liste ist, die zu dekodierende Referenzbilder von dem Zugangspunkt sequentiell anordnet, um das anzuzeigende nächste Bild zu erhalten;
e) Einrichtungen zum Erhalten von der Rekonstruktionsliste des anzuzeigenden nächsten Bildes durch Dekodieren aller oder eines Teils der Bilder der Rekonstruktionsliste.

24. Vorrichtung nach Anspruch 23, wobei die Einrichtungen zum Zuordnen der Identifikationsnummern zu den kodierten Bildern in dem Fluss die Nummern in sequentieller Weise gemäß der Reihenfolge einer Anzeige der Bilder zuordnen.

25. Vorrichtung nach Anspruch 24, wobei die Einrichtungen zum Bestimmen das anzuzeigende nächste Bild anhand seiner Identifikationsnummer bestimmt.

26. Vorrichtung nach einem der Ansprüche 23 bis 25, wobei die Einrichtungen zum Erhalten des anzuzeigenden nächsten Bildes Einrichtungen zum Verifizieren umfassen, ob zumindest eines der Bilder der Rekonstruktionsliste, das mit dem anzuzeigenden nächsten Bild verknüpft ist, nicht bereits in irgendeinem der Rahmenspeicher gespeichert wurde, und wobei, wenn dem so ist, mit einer sequentiellen Dekodierung der Bilder der Liste nicht von dem Zugangspunkt der dekodierbaren Gruppe von Bildern, sondern von dem bereits gespeicherten Bild, oder gegebenenfalls von den bereits gespeicherten Bildern, welche die höchsten Dekodierungskosten darstellen, begonnen wird.

27. Vorrichtung nach einem der Ansprüche 23 bis 26, ferner mit Einrichtungen zum Berechnen einer Verzögerung bezüglich einer theoretischen Anzeigegeschwindigkeit, jedes Mal, wenn ein Bild angezeigt wird, und Einrichtungen zum Bestimmen des anzuzeigenden nächsten Bildes derart, dass die Verzögerung durch Überspringen der Bilder nach den folgenden Prioritätsregeln aufgehoben wird:
Überspringen zunächst eines oder mehrerer Bilder des Typs B;
falls ein oder mehrere übersprungene Bilder des Typs B nicht ausreichen, um die Verzögerung aufzuheben, werden ein oder mehrere Bilder des Typs P übersprungen;
falls ein oder mehrere übersprungene Bilder des Typs P nicht ausreichen, um die Verzögerung aufzuheben, werden ein oder mehrere Teile des Flusses von Daten während des Ladens eines nächsten Teils des Flusses von Daten in den Pufferspeicher übersprungen.

28. Vorrichtung nach einem der Ansprüche 23 bis 27, wobei der Pufferspeicher eine erste und eine zweite Speicherbank aufweist, und wobei die Einrichtungen zum Ändern und die Einrichtungen zum Analysieren in der ersten Speicherbank des Pufferspeichers für einen ersten Teil des Flusses betrieben werden, während die Einrichtungen zum Erhalten der Indexierungstabelle und die Einrichtungen zum Erhalten des anzuzeigenden nächsten Bildes in der zweiten Speicherbank des Pufferspeichers für einen zweiten Teil des Flusses betrieben werden.

29. Vorrichtung nach Anspruch 28, ferner mit Einrichtungen zum Verhindern eines Überschreibens der in der einen oder der anderen der ersten und zweiten Speicherbank gespeicherten Daten, solange diese Daten für die Verarbeitung der in der anderen der ersten und zweiten Speicherbank enthaltenen Daten noch benötigt werden.

30. Vorrichtung nach Anspruch 28 oder 29, ferner mit Einrichtungen zum Überschreiben der in der einen oder der anderen der ersten und zweiten Speicherbank gespeicherten Daten mit einem neuen Teil des Flusses in Schritt a), sobald diese Daten für die Verarbeitung der in der anderen der ersten und zweiten Speicherbank enthaltenen Daten nicht mehr benötigt werden.

31. Vorrichtung nach einem der Ansprüche 28 bis 30, ferner mit Einrichtungen, damit sich die in die erste Speicherbank und in die zweite Speicherbank geladenen Teile des Flusses überlappen, und damit eine Verbindung zwischen diesen beiden Teilen auf dem Pegel eines gewöhnlichen Bildes realisiert werden kann.

32. Vorrichtung nach Ansprüchen 28 bis 31, ferner mit Einrichtungen zum Vereinen der Indexierungstabellen relativ zu jedem der in die erste Speicherbank und in die zweite Speicherbank geladenen Flussteile in einer einzelnen Indexierungstabelle.

33. Pilotvideoschaltung mit einer Vorrichtung nach einem der Ansprüche 17 bis 32.

34. Dekoder mit einer Pilotvideoschaltung nach Anspruch 33.
